**Europäisches Patentamt**

**European Patent Office**

**Office européen des brevets**

(19)

(11) Numéro de publication: **0 189 711**
**B1**

(12) # FASCICULE DE BREVET EUROPÉEN

(45) Date de publication du fascicule du brevet:
19.04.89

(51) Int. Cl.⁴: **H 04 M 1/00,** H 04 M 1/76

(21) Numéro de dépôt: **85402612.7**

(22) Date de dépôt: **24.12.85**

(54) **Poste téléphonique d'abonné à haut parleur d'écoute amplifiée avec réduction de gain en cas d'alimentation insuffisante.**

(30) Priorité: **27.12.84 FR 8419920**

(43) Date de publication de la demande:
**06.08.86 Bulletin 86/32**

(45) Mention de la délivrance du brevet:
**19.04.89 Bulletin 89/16**

(84) Etats contractants désignés:
**DE FR IT NL SE**

(56) Documents cité:
**EP-A-0 063 748**
**FR-A-2 350 014**

(73) Titulaire: **THOMSON- CSF, 173, Boulevard Haussmann, F-75379 Paris Cédex 08 (FR)**

(72) Inventeur: **Defretin, Bruno, THOMSON- CSF SCPI 173, bld Haussmann, F-75379 Paris Cedex 08 (FR)**

(74) Mandataire: **Rinuy, Santarelli, 14, avenue de la Grande Armée, F-75017 Paris (FR)**

LIBER, STOCKHOLM 1989

## Description

La présente invention concerne les postes téléphoniques d'abonné.

Certains postes sont pourvus d'un haut-parleur d'écoute amplifiée permettant d'entendre le correspondant sans tenir le combiné près de l'oreille.

Ce haut-parleur consomme une énergie importante puisqu'il doit assurer une sonorisation beaucoup plus forte que celle du hautparleur du combiné. Or l'énergie d'alimentation du poste d'abonné est totalement fournie par la ligne téléphonique elle-même.

Dans le cas où l'alimentation de la ligne est normale (par exemple en cours de conversation), l'énergie reçue est suffisante pour assurer une alimentation des diverses fonctions du poste, y compris l'alimentation d'un amplificateur couplé au haut-parleur d'écoute amplifiée. A titre d'exemple une alimentation de ligne normale correspond à un courant reçu de l'ordre de 15 à 150 milliampères sous 4 volts.

Mais dans le cas ou l'alimentation de la ligne n'est plus normale et devient insuffisante, par exemple si elle descend au-dessous de 10 milliampères, l'amplificateur du haut-parleur d'écoute amplifiée ne peut plus assurer correctement son rôle. En particulier il distord complètement les signaux qu'il reçoit.

En principe on n'a besoin du haut-parleur d'écoute amplifieque dans des cas où l'alimentation de la ligne est normale.

Mais dans certains cas exceptionnels on peut en avoir besoin même si l'alimentation par la ligne est anormalement faible.

Un exemple de cette situation anormale est le suivant: certains postes téléphoniques modernes sont prévus pour permettre une prise de ligne sans décrochage du combiné; on peut ainsi composer un numéro d'appel sans décrocher le combiné. Il peut arriver alors que l'utilisateur prenne la ligne et que, pour une raison ou pour une autre, aucun numéro complet ne soit composé. Le central téléphonique est conçu pour attendre la composition d'un numéro d'appel lorsque l'abonné a pris la ligne; mais s'il ne reçoit aucun signal de numérotation au bout d'un certain temps, il émet une tonalité particulière et réduit l'alimentation de la ligne à une faible valeur. La tonalité particulière est reçue par le poste et est transmise à l'amplificateur du haut-parleur d'écoute amplifiée. Cela est nécessaire car dans ce type de poste à prise de ligne sans décrochage du combiné, il faut absolument qu'il y ait une possibilité de savoir que la ligne est en prise sur le central téléphonique sans qu'aucun signal de numérotation ait été envoyé au central. Malheureusement, dans ce cas, l'alimentation de la ligne est tellement réduite que l'amplificateur du haut-parleur d'écouté amplifiée transmet un signal extrêmement distordu, qui ne permet pratiquement pas de reconnaître la tonalité particulière envoyée ou en tout cas qui la déforme d'une manière inacceptable.

D'autres cas de distorsion existent: en particulier, lorsque le signal à amplifier a une amplitude trop importante et exige pour une amplification correcte une énergie supérieure à celle qui est disponible sur la ligne (même lorsque la ligne est alimentée normalement). De plus, dans ce cas, le condensateur réservoir qui est souvent prévu pour l'alimentation du haut-parleur d'écoute amplifiée risque de se décharger ; ceci conduit à une distorsion de signal qui se prolonge jusqu'à la recharge du condensateur même si le signal à amplifier a repris entre temps un niveau d'amplitude normal.

C'est pourquoi la présent invention propose de modifier la constitution des postes téléphoniques d'abonné d'une manière propre à remédier à ce type de défaut.

Le poste selon l'invention, qui comporte donc un haut-parleur d'écoute amplifiée et un amplificateur pour transmettre au haut-parleur les signaux alternatifs présents sur la ligne, comprend en outre:
- un régulateur de tension shunt recevant une fraction de l'énergie fournie par la ligne,
- un moyen de détection du courant traversant le régulateur shunt,
- l'amplificateur étant un amplificateur à gain commandé dont le gain est commandé par la sortie du moyen de détection pour réduire à une plus faible valeur le gain de l'amplificateur lorsque le courant traversant le régulateur shunt diminue de manière importante.

D'autres caractéristiques et avantages de l'invention apparaîtront à la lecture de la description détaillée qui suit et qui est faite en référence aux dessins annexés dans lesquels:

- la figure 1 représente un schéma bloc du circuit selon l'invention,
- la figure 2 représente un exemple détaillé de régulateur shunt permettant de réaliser l'invention.

Etant donné que l'invention ne concerne qu'une partie des circuits d'un poste téléphonique d'abonné, on n'a représenté que très schématiquement les divers autres circuits de ce poste. Ces circuits ne sont indiqués que pour mieux situer le contexte de l'invention.

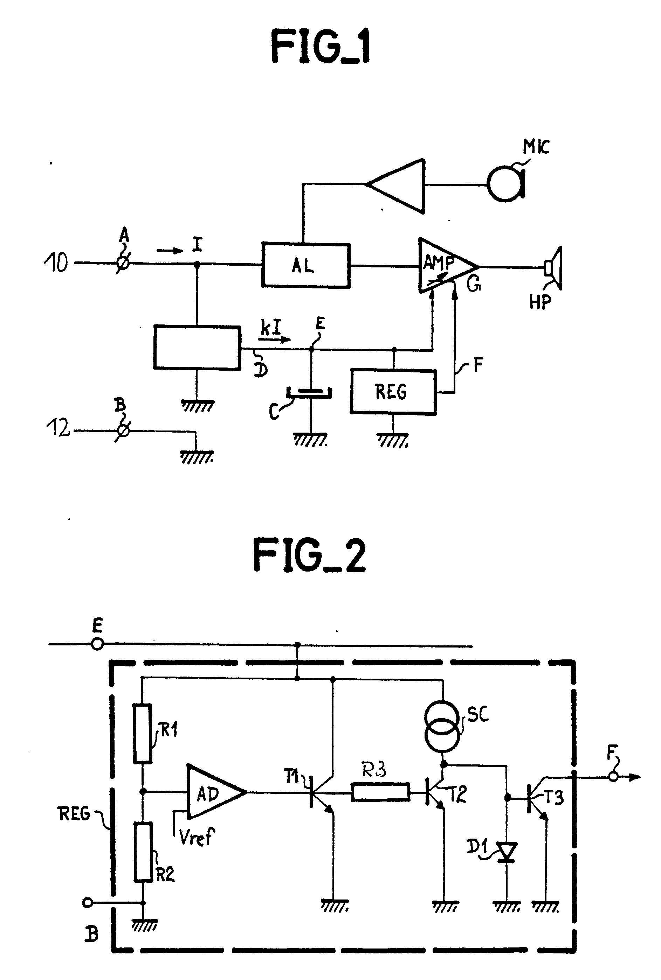

Sur la figure 1, une ligne téléphonique à deux conducteurs 10 et 12 est connectée à deux bornes d'entrée de ligne, A et B, du poste téléphonique. On considèrera que la borne B constitue une borne de masse électrique pour l'ensemble des circuits du poste.

Cette ligne alimente en continu comme en alternatif les divers circuits du poste. On considère ici, comme c'est le cas généralement, que les circuits d'écoute amplifiée sont alimentés à partir d'un conducteur D qui transmet un courant kI proportionnel au courant I circulant dans la ligne. Ce courant est utilisé comme source d'énergie pour un amplificateur AMP d'écoute amplifiée alimentant un haut-parleur extérieur HP.

Pour effectuer cette alimentation, on prévoit qu'un condensateur réservoir C est connecté entre une borne E d'extrémité du conducteur D et la masse B; on prévoit également un régulateur shunt REG placé entre la borne E et la borne B; un tel régulateur est encore appelé "zener électronique", car il a la même fonction qu'une diode zener qui serait placée entre les bornes E et B: limitation de la tension entre ces bornes et dérivation d'un courant d'autant plus important. que la tension entre les bornes E et B tend à monter. L'alimentation de l'amplificateur AMP est prélevée entre les bornes E et B, c'est-à-dire en parallèle sur le régulateur shunt.

L'entrée de l'amplificateur AMP reçoit les signaux alternatifs reçus de la ligne à travers un circuit AL dit circuit antilocal qui a pour fonction de transmettre les signaux reçus de la ligne téléphonique en éliminant les signaux émis sur la ligne à partir du microphone MIC du poste.

Selon l'invention, le courant dérivé de la borne E vers la borne B dans le régulateur shunt est mesuré sur une sortie supplémentaire F du régulateur et un signal de mesure correspondant (courant ou tension) est appliqué à une borne G de commande de gain de l'amplificateur AMP. Le gain de l'amplificateur est asservi au courant dérivé par le régulateur shunt dans un sens tendant à limiter fortement le gain lorsque le courant dérivé devient faible et correspond à une valeur de courant de ligne I insuffisante pour l'alimentation normale du porte avec son haut-parleur d'écoute amplifiée. Un exemple de valeur d'atténuation peut-être de 6 db au maximum.

La figure 2 représente à titre d'exemple un circuit de zener électronique ou régulateur shunt avec un circuit de détection du courant dérivé. Le régulateur comprend un amplificateur différentiel AD dont une entrée est reliée au point milieu d'un pont diviseur R1 R2 placé entre les bornes E et B et une autre entrée est reliée à une tension de référence Vréf. La sortie de l'amplificateur commande la base d'un transistor T1 dont l'émetteur et le collecteur sont reliés respectivement aux bornes B et E; un autre transistor T2 a son émetteur relié à la borne B, son collecteur relié à une source de courant SC alimentée par la borne E, et sa base reliée, éventuellement par l'intermédiaire d'une résistance R3, à la base du transistor T1. Le courant dans le collecteur du transistor T2 constitue une mesure du courant dans le transistor T1. La différence entre le courant de la source SC et le courant dans le collecteur du transistor T2 constitue aussi un signal de mesure du courant dans le transistor T1. Cette différence est envoyée dans une diode D1 (relié entre le collecteur de T2 et la masse B) et elle est recopiée par un transistor T3 dont la base est reliée à l'anode de la diode D1 et l'émetteur a la cathode. L'ensemble des éléments T2, T3, D1, SC constitue un moyen de détection du courant dérivé dans le régulateur shunt.

Le courant de collecteur de T3, d'autant plus fort que le courant dérivé par le régulateur est plus faible, donc que le courant alimentant la ligne est plus faible, constitue un signal de commande de réduction du gain de l'amplificateur AMP. On sait très bien réaliser des amplificateurs dont le gain est commandé par un courant.

La source de courant SC permet de fixer un seuil à partir duquel la régulation de gain n'agit plus du tout. De cette manière, l'amplificateur n'est pas soumis du tout à un effet de compression de signal lorsque l'alimentation par la ligne dépasse un certain seuil. Ce n'est qu'au-dessous de cette limite inférieure, dépendant de l'amplitude du courant de la source SC, que la réduction de gain est progressivement effectuée.

## Revendications

1. Poste téjéphonique d'abonné, comprenant un haut-parleur extérieur d'écoute amplifiée (HP), un amplificateur (AMP) pour transmettre au haut-parleur d'écoute amplifiée les signaux présents sur la ligne caractérisé en ce qu'il comporte un régulateur de tension shunt (REG) recevant une fraction de l'énergie fournie par la ligne téléphonique, ce régulateur comprenant un moyen (T2, T3, SC,D1) de détection du courant traversant le régulateur shunt, et en ce que l'amplificateur est un amplificateur à gain commandé électriquement, dont le gain est commandé par la sortie (F) du moyen de détection pour réduire a une plus faible valeur le gain de l'amplificateur lorsque le courant traversant le régulateur shunt diminue de manière importante.

2. Poste téléphonique selon la revendication 1, caractérisé en ce que le moyen de détection définit un seuil au dessous duquel une réduction de gain a lieu progressivement en fonction de la réduction du courant traversant le régulateur et au-dessus duquel aucune réduction de gain n'a lieu.

## Patentansprüche

1. Fernsprechgerät mit einem Außenlautsprecher (HP) für verstärktes Abhören und einem Verstärker (AMP) zur Übertragung der auf der Leitung vorhandenen Signale an den Lautsprecher für verstärktes Abhören, dadurch gekennzeichnet, daß es mit einem Shunt-Spannungsregler (REG) ausgerüstet ist, der einen Teil der von der Telefonleitung gelieferten Energie empfängt und eine Einrichtung (T2, T3, SC, D1) zur Ermittlung des durch den Shunt-Regler hindurchfließenden Stroms aufweist, und daß der Verstärker ein Verstärker mit elektrisch gesteuertem Verstärkungsfaktor ist, dessen Verstärkungsfaktor durch den Ausgang (F) der Einrichtung zur Stromermittlung gesteuert wird, wobei der Verstärkungsfaktor dann auf einen niedrigeren Wert reduziert wird, wenn der durch den Shunt-Regler hindurchfließende Strom erheblich absinkt.

2. Fernsprechgerät nach Anspruch 1, dadurch gekennzeichnet, daß die Einrichtung zur Stromermittlung eine Schwelle festlegt, unterhalb derer eine Verkleinerung des Verstärkungsfaktors progressiv in Abhängigkeit von der Verkleinerung des durch den Regler fließenden Stroms und über der keine Verkleinerung des Verstärkungsfaktors erfolgt.

## Claims

1. A telephone apparatus comprising an external loudspeaker for amplified listening (HP) and an amplifier (AMP) to transmit the signals present on the line to the loudspeaker for amplified listening, characterized in that it comprises a shunt voltage regulator (REG) receiving a fraction of the energy supplied by the telephonic line, this regulator comprising a means (T2, T3, SC, D1) for detecting the current passing through the shunt regulator, and in that the amplifier is an electrically controlled gain amplifier, the gain of which is controlled by the output (F) of the detection means in order to reduce the gain of the amplifier to a lower value when the current passing through the shunt regulator decreases significantly.

2. A telephone apparatus according to Claim 1, characterized in that the detection means defines a threshold value below which a reduction of gain occurs progressively as a function of the reduction in current passing through the regulator and above which no reduction of gain occurs.

# FIG_1

# FIG_2

1